(19) Europäisches Patentamt
European Patent Office
Office européen des brevets

(11) EP 2 423 250 B1

(12) **EUROPEAN PATENT SPECIFICATION**

(45) Date of publication and mention of the grant of the patent:
**17.12.2014 Bulletin 2014/51**

(51) Int Cl.:
***C08J 9/00*** *(2006.01)* ***C08L 69/00*** *(2006.01)*
***C08L 67/02*** *(2006.01)* ***C08G 63/672*** *(2006.01)*

(21) Application number: **11179204.0**

(22) Date of filing: **29.08.2011**

(54) **Process for producing a polycarbonate resin extruded foam**

Verfahren zur Herstellung eines Polycarbonat-Extrusionsschaumes

Procédé pour la production d'une mousse extrudée de résine de polycarbonate

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2010 JP 2010193696**

(43) Date of publication of application:
**29.02.2012 Bulletin 2012/09**

(73) Proprietor: **JSP CORPORATION**
**Tokyo 100-0005 (JP)**

(72) Inventors:
- **Ishikawa, Tatsuyuki**
  **Tochigi, 322-0014 (JP)**
- **Kogure, Naochika**
  **Tochigi, 322-0014 (JP)**
- **Okuda, Akira**
  **Tochigi, 322-0014 (JP)**

(74) Representative: **Wagner, Matthias**
**Müller-Gerbes Wagner Albiger Patentanwälte**
**Friedrich-Breuer-Strasse 72-78**
**53225 Bonn (DE)**

(56) References cited:
**EP-A1- 1 460 106 EP-A1- 1 882 712**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 423 250 B1

## Description

BACKGROUND OF THE INVENTION

1. Field of the Invention

The present invention relates to a process for producing a polycarbonate resin extruded foam, and a polycarbonate resin extruded foam. More specifically, the invention relates to a process for producing a polycarbonate resin extruded foam, including kneading a blowing agent and a base resin in which a specific polyester resin is blended with a polycarbonate resin to prepare a foamable melted resin, and extruding and foaming the foamable melted resin; and a polycarbonate resin extruded foam containing, as a base resin, a mixture of a polycarbonate resin and a specific polyester resin.

2. Description of Related Art

Polycarbonate resin has high in heat resistance and oxygen index, and has also good in electrical characteristics, and mechanical characteristics; thus, the resin is widely used in the field of automobiles, architecture, and civil engineering. About polycarbonate resin extruded foams particularly, the use thereof is expected to be developed into various materials and articles, such as light structural materials, heat insulating materials and interior materials, in the field of construction materials required to have heat resistance, flame retardant, and very good mechanical characteristics.

In recent years, from the viewpoint of the protection of the global environment, it has been desired to make a further improvement in the thermal insulation properties of synthetic resin foams. Hydrocarbon is favorably used as a blowing agent for synthetic resin foams since hydrocarbon makes it possible to make the thermal insulation properties of the foams high and further have an Ozone Depletion Potential (ODP) of zero, a small Global Warming Potential (GWP), and a good foaming property. However, hydrocarbon dissipates gradually from the inside of a foam. As a result, the thermal insulation properties of the foam decline gradually with the passage of time. Thus, it is desired to keep the thermal insulation properties over a long term.

A means for improving the thermal insulation properties of a synthetic resin foam is, for example, a manner of making the expansion ratio of a foam therefor high, or a manner of making cells therein fine. When the form of cells in a foam is made flat, the foam can be improved in thermal insulation properties.

However, polycarbonate resin is a resin having a high flow starting temperature. Thus, in order to produce a polycarbonate resin extruded foam, it is necessary to extrude and foam a raw material thereof at a high temperature and a high pressure. At such a high temperature and a high pressure, it is originally difficult to gain a desired foam according to an ordinary extrusion foaming process carried out for commodity plastics, such as polystyrene, since the polycarbonate resin (in the polycarbonate resin extruded foam) is small in melt tension. For this reason, in the extrusion foaming of polycarbonate resin, the resin is excessively foamed and expanded, or cells therein are made excessively fine, so that troubles may be caused in the foaming. Moreover, when the form of cells in a foam is made excessively flat, the foam tends to be declined in mechanical strengths such as compression strength. It is not easy to improve the thermal insulation properties of polycarbonate resin foam without damaging mechanical strengths thereof.

Japanese Patent No. 3692411, Japanese Patent Application Laid-Open (JP-A) Nos. 11-254502 and 2006-199879 each disclose the following process as a process about which at the time of producing a polycarbonate resin extruded foam, the extrusion foaming performance of a raw material thereof is improved: a process of kneading a blowing agent and a polycarbonate resin having a specific melt viscosity and a specific melt tension to prepare a blowing-agent-containing foamable melted resin, and extruding and foaming the melted resin to produce a polycarbonate resin extruded foam.

Furthermore, JP-A No. 2008-144084 discloses that by using, as a polycarbonate resin, a polycarbonate resin modified with a molecular weight modifier made of an acrylic copolymer having epoxy groups, a foam in the form of a board is obtained which has a high expansion ratio and a large sectional area, and has a large compression strength at end regions in the width direction thereof. However, from the viewpoint of improving the thermal insulation properties of the foam, there remains a room for a further improvement.

Japanese Patent No. 3448758 discloses a process for producing a polycarbonate resin extruded and foamed sheet having a high closed cell volume percentage by blending a polyester resin and a crosslinking agent with a polycarbonate resin to introduce a crosslinked structure into the polyester resin, thereby improving the melt viscosity, the melt tension and elastic characteristics of the polycarbonate resin to improve the foaming performance thereof. However, this producing process is insufficient for producing a polycarbonate resin extruded foam having a large thickness and high expansion ratio. Furthermore, this process is not aimed at improving the thermal insulation properties of the foam.

SUMMARY OF THE INVENTION

An object of the invention is to provide a process making it possible to produce a polycarbonate resin extruded foam that has high mechanical strengths, a small thermal conductivity and a very good thermal insulation properties, and can maintain the very good thermal insulation properties for a long term. Another object thereof is to provide a polycarbonate resin extruded foam that has high mechanical strengths, a small thermal conductivity and a very good thermal insulation properties, and can maintain the very good thermal insulation properties for a long term.

In order to attain the objects, the inventors have made investigations about polycarbonate resin extruded foams, so as to find out that a target polycarbonate resin extruded foam, which has very good mechanical strengths, a small thermal conductivity, and a very good thermal insulation properties over a long term, can be obtained by using a mixture in which a specific polyester resin is blended with a polycarbonate resin, kneading the mixture and a blowing agent to prepare a foamable melted resin, and then extruding and foaming the resin.

Accordingly, the invention is as follows:

(1) A process of extruding and foaming a foamable melted resin obtained by kneading a polycarbonate resin, a polyester resin, and a blowing agent, extruding and foaming the foamable melted resin from a flat die to a forming tool composed of upper and lower plates, or upper and lower belts conveyor, thereby producing a polycarbonate resin extruded foam, board having thermal insulation properties, wherein the polyester resin is a polyester copolymer comprising more than one diol component units which contain therein glycol component units having a cyclic ether structure in an amount of 25 to 50% by mole of the diol component units, and one or more dicarboxylic acid component units, and the polycarbonate resin includes a modified polycarbonate resin modified with a branching agent comprising an acrylic polymer having an epoxy group, and the blend amount of the polyester resin is from 5 to 100 parts by weight for 100 parts by weight of the polycarbonate resin.

(2) The process according to the above (1) for producing a polycarbonate resin extruded foam, wherein the percentage by mole of the glycol component units having a cyclic ether structure in the diol component units is from 30 to 45% by mole.

(3) The process according to the above (1) for producing a polycarbonate resin extruded foam, wherein the blend amount of the polyester resin is from 10 to 70 parts by weight for 100 parts by weight of the polycarbonate resin.

(4) The process according to the above (1) for producing a polycarbonate resin extruded foam, wherein the diol component units comprise 25 to 50% by mole of 3,9-bis(1,1-dimethyl-2-hydroxyethyl)-2,4,8,10-tetraoxaspiro[5 .5] undecane component units, and 75 to 50% by mole of ethylene glycol component units (provided that the total amount of the two component unit species is 100% by mole), and the dicarboxylic acid component units comprise terephthalic acid component units.

(5) The process according to the above (1) for producing a polycarbonate resin extruded foam, wherein the diol component comprise 30 to 45% by mole of 3,9-bis(1,1-dimethyl-2-hydroxyethyl)-2,4,8,10-tetraoxaspiro[5 .5]undecane component units, and 70 to 55% by mole of ethylene glycol component units (provided that the total amount of the two component unit species is 100% by mole), and the dicarboxylic acid component units comprise terephthalic acid component units.

(6) The process according to the above (1) for producing a polycarbonate resin extruded foam, wherein the polyester resin is a resin satisfying the following: a value of 0 to 5 J/g is the calorific value of an exothermic peak associated with crystallization of the polyester resin in a DSC curve thereof that is obtained by keeping the polyester resin at 300°C for 10 minutes and subsequently cooling the resin at a cooling rate of 10°C/minute by heat flux differential scanning calorimetry according to JIS K 7122 (1987).

(7) The process according to the above (7) for producing a polycarbonate resin extruded foam, wherein the blend amount of the branching agent is from 0.05 to 30 parts by weight for 100 parts by weight of the polycarbonate resin.

(8) The process according to the above (7), wherein the polycarbonate resin extruded foam board exhibits an apparent density of 40 to 400 kg/$m^3$, and a thickness of 1 mm or more, wherein: the polyester resin is a polyester copolymer comprising more than one diol component units which contain therein glycol component units having a cyclic ether structure in an amount of 25 to 50% by mole of the diol component units, and one or more dicarboxylic acid component units; and the blend amount of the polyester resin is from 5 to 100 parts by weight for 100 parts by weight of the polycarbonate resin.

The process of the invention for producing a polycarbonate 7 resin extruded foam makes it possible to produce, as the foam, a polycarbonate resin extruded foam that is higher in mechanical strengths, smaller in thermal conductivity, and better in thermal insulation properties over a long term than conventional polycarbonate resin extruded foams.

Moreover, the polycarbonate resin extruded foam is higher in mechanical strengths, smaller in thermal conductivity, and better in thermal insulation properties over a long term than conventional polycarbonate resin extruded foams. Thus, the foam is used for heat insulating material.

DETAILED DESCRIPTION OF EMBODIMENTS

The process of the invention for producing a polycarbonate resin extruded foam is a process of kneading, together with a blowing agent, a mixture in which 5 to 100 parts by weight of a polyester copolymer are blended into 100 parts by weight of a polycarbonate resin, this polyester copolymer being a resin containing diol component units which contain therein glycol component units having a cyclic ether structure in an amount of 25 to 50% by mole of the diol component units, and dicarboxylic acid component units, thereby preparing a foamable melted resin, and then extruding and foaming the foamable melted resin, thereby producing the foam.

The polycarbonate resin extruded foam produced by the producing process of the invention is remarkably better in mechanical properties such as compression strength than foams each containing, as a base resin thereof, only the polycarbonate resin (used in the foam). The elastic modulus of the specific polyester resin used in the invention are not largely different from those of the polycarbonate resin. It is therefore assumed that the reason why the mechanical properties of the foam are improved is as follows: by blending the specific polyester resin into the polycarbonate resin, the melt viscoelasticity of the melted mixed resin is improved when the resin is extruded, so that the foamability and moldability thereof is remarkably improved; thus, when the melted resin is foamed, its cell membranes are sufficiently extended.

Furthermore, the polycarbonate resin extruded foam produced by the producing process of the invention, into which the specific polyester resin is blended, becomes lower in thermal conductivity than foams each containing, as a base resin thereof, only the polycarbonate resin. In general, about non-foamed resins in a solid state, heat is conducted in the solids mainly through thermal conduction. Thus, the thermal conductivity of each of the non-foamed resins is decided by the thermal conductivity of the resin itself. On the other hand, about foams, heat is conducted through thermal conduction based on gases in cells in each of the foams (the remaining blowing agent, and atmospheric components such as air), and the convection thereof besides the thermal conduction of the resin itself. When the cell diameter is 4 mm or less, the conduction of heat through convection can be ignored. Since the cells are made in the foam to be in a form that the cells are largely stacked, heat is conducted also through infrared radiation between its cell membranes. In any foam into which the polyester resin is blended into a polycarbonate resin, it is assumed that the absorption of infrared rays into the polyester resin makes an improvement in the effect of decreasing the heat conduction based on this radiation so as to decrease the heat conduction based on the radiation, whereby the foam is improved in thermal insulation properties.

It is also assumed that a factor for improving the thermal insulation properties is an improvement in the gas barrier property of the polycarbonate resin extruded foam produced by the producing process of the invention. The specific polyester resin used in the invention, which has a cyclic ether structure, is several times higher in gas permeation rate of oxygen, nitrogen, a hydrocarbon, or some other than general crystalline polyester resins such as polyethylene terephthalate. Moreover, the specific polyester resin can hardly be expected to have a gas-barrier-improving effect based on foaming and expansion. Usually, therefore, it is difficult to suppose that in order to restrain the dissipation of a blowing agent from a foam, and the inflow of the air into the foam, it is effective to incorporate a polyester resin as described above, which has a cyclic ether structure.

However, the following has been understood: in the case of blending a specific amount of a specific polyester resin into a polycarbonate resin, as performed in the invention, the resultant foam surprisingly expresses a gas barrier property sufficient to restrain the inflow of the air into cells in the foam, and further restrain the dissipation of a blowing agent from the foam in the case of using, as this agent, a sustained-release type blowing agent, such as a hydrocarbon; thus, the foam is improved in thermal insulation properties. The reason for the expression of the gas barrier property is unclear; however, it appears that a polycarbonate resin, and the polyester resin used in the invention are very good in compatibility with each other, so that the polyester resin is satisfactorily micro-dispersed in the polycarbonate resin, whereby a gas permeation blocking effect is generated.

The individual components of the base resin in the invention will be described in detail hereinafter.

(1) Polycarbonate resin

The polycarbonate resin used in the invention is preferably, for example, an aromatic polycarbonate resin produced by a transesterification reaction method in the presence of an alkali metal compound catalyst, using a diester carbonate and an aromatic dihydroxy compound as raw materials. Specific examples of the aromatic dihydroxy compound as one of the raw materials in the transesterification reaction method are as follows:

Bis(4-hydroxyphenyl)methane,
1,1-bis(4-hydroxyphenyl)ethane,
2,2-bis(4-hydroxyphenyl)propane (= bisphenol A),
2,2-bis(4-hydroxy-3-methylphenyl)propane,

2,2-bis(4-hydroxy-3-t-butylphenyl)propane,
2,2-bis(4-hydroxy-3,5-dimethylphenyl)propane,
1,1-bis(3-t-butyl-4-hydroxyphenyl)propane,
2,2-bis(4-hydroxy-3,5-dibromophenyl)propane (= tetrabromobisphenol A),
2,2-bis(3-bromo-4-hydroxyphenyl)propane,
2,2-bis(3,5-dichloro-hydroxyphenyl)propane,
2,2-bis(4-hydroxyphenyl)heptane,
1,1-bis(4-hydroxyphenyl)cyclopentane,
1,1-bis(4-hydroxyphenyl)cyclohexane,
1,1-bis(3,5-dichloro-4-hydroxyphenyl)cyclohexane,
1,1-bis(3,5-dibromo-4-hydroxyphenyl)cyclohexane,
3,3',5,5'-tetramethyl-4,4'-dihydroxybiphenyl,
bis(4-hydroxyphenyl)sulfone, bis(4-hydroxyphenyl)sulfide,
bis(4-hydroxyphenyl) ether, and bis(4-hydroxyphenyl) ketone.

These aromatic dihydroxy compounds may be used alone or in the form of a mixture of two or more thereof. Of these examples, preferred are 2,2-bis(4-hydroxyphenyl)propane (= bisphenol A), 2,2-bis(4-hydroxy-3-methylphenyl)propane, 2,2-bis(4-hydroxy-3-t-butylphenyl)propane, 2,2-bis(4-hydroxy-3,5-dimethylphenyl)propane, 1,1-bis(3-t-butyl-4-hydroxyphenyl)propane, 2,2-bis(4-hydroxy-3,5-dibromophenyl)propane (= tetrabromobisphenol A), and others.

Examples of the diester carbonate include substituted diphenyl carbonates, typical examples of which are diphenyl carbonate, and ditolyl carbonate; and dialkyl carbonates, typical examples of which are dimethyl carbonate, diethyl carbonate, and di-t-butyl carbonate.

(2) Polyester resin

The polyester resin used in the invention (hereinafter referred to as the polyester resin A) is a polyester copolymer containing diol component units which contain therein glycol component units having a cyclic ether structure in an amount of 25 to 50% by mole of the diol component units, and dicarboxylic acid component units. If the proportion of the glycol component units having the cyclic ether structure is too small, the expected purposes, such as an improvement in mechanical properties and the thermal insulation properties of the resultant extruded foam, cannot be attained probably because the polyester resin is insufficient in compatibility with the polycarbonate resin. On the other hand, if the proportion of the component unit is too large, a good foam is not stably obtained with ease probably because the crystallization of the polyester resin advances easily while base resin is foamed. From this viewpoint, the proportion of the glycol component unit having the cyclic ether structure is preferably from 30 to 45% by mole of the diol component unit. To attain the objects of the invention, the glycol component unit having the cyclic ether structure is preferably a glycol component unit having a cyclic acetal structure.

The blend amount of the polyester resin A to the polycarbonate resin is from 5 to 100 parts by weight for 100 parts by weight of the polycarbonate resin. If the blend amount of the polyester resin A is too small, the effect of improving mechanical properties and the thermal insulation properties of the resultant foam is not obtained. On the other hand, if the blend amount is too large, very good properties peculiar to the polycarbonate resin, such as heat resistance and impact resistance, are not easily expressed. From this viewpoint, the blend amount of the polyester resin A is preferably from 10 to 70 parts by weight for 100 parts by weight of the polycarbonate resin. The blend amount of the polyester resin A is more preferably from 15 to 40 parts by weight for 100 parts by weight of the polycarbonate resin since the mixture is particularly good in foamability and moldability.

The diol having the cyclic ether structure, which is one component of the raw material monomers of the polyester resin A, is preferably a compound represented by a general formula (1) or (2) illustrated below. The compound may be produced in the presence of an acid catalyst from a hydroxyaldehyde that may be of various types, and pentaerythritol, trimethylolpropane or some other.

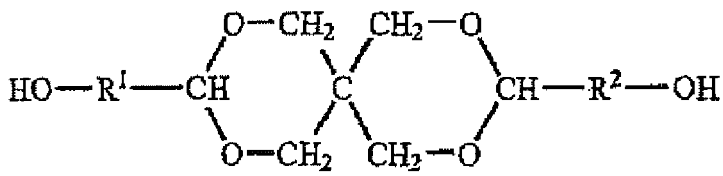

(1)

In the formula (1), $R^1$ and $R^2$ each independently represent a characteristic group selected from noncyclic hydrocarbon groups each having 1 to 10 carbon atoms, alicyclic hydrocarbon groups each having 3 to 10 carbon atoms,

and aromatic hydrocarbon groups each having 6 to 10 carbon atoms, and are each preferably, for example, a methylene, ethylene, propylene or butylene group, or an isopropylene or isobutylene group, which is a structural isomer of one of these groups.

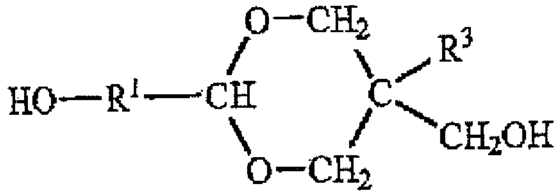

(2)

In the formula (2), $R^1$ has the same meaning as described above, $R^3$ represents a characteristic group selected from noncyclic hydrocarbon groups each having 1 to 10 carbon atoms, alicyclic hydrocarbon groups each having 3 to 10 carbon atoms, and aromatic hydrocarbon groups each having 6 to 10 carbon atoms, and are each preferably, for example, a methyl, ethyl, propyl or butyl group, or an isopropyl or isobutyl group, which is a structural isomer of one of these groups.

Specific examples of the compound represented by the general formula (1) include

3,9-bis(1,1-dimethyl-2-hydroxyethyl)-2,4,8,10-tetraoxaspiro[5 .5]undecene, which may be referred to as "spiroglycol" hereinafter.

Specific examples of the compound represented by the general formula (2) include

5-methylol-5-ethyl-2-(1,1-dimethyl-2-hydroxyethyl)-1,3-dioxan e, and
2-((5-ethyl-5-hydroxymethyl-1,3-dioxane-2-yl)-2-methylpropane-1-ol.

The polyester resin A is preferably a polyester copolymer made of: diol component units that contain 25 to 50% by mole of spiroglycol component units, and 75 to 50% by mole of ethylene glycol component units (provided that the total amount of the two unit species is 100% by mole); and dicarboxylic acid component units each made of a terephthalic acid component since the foaming property of the polycarbonate resin can be particularly improved.

The terephthalic acid component is desirably produced as an ester of terephthalic acid by copolymerizing the acid with a diol component. Examples of the ester of terephthalic acid include dimethyl terephthalate, dipropyl terephthalate, diisopropyl terephthalate, dibutyl terephthalate, and dicyclohexyl terephthalate.

The polyester resin A of the invention is more preferably a resin containing diol components that contain 30 to 45% by mole of spiroglycol component units and 70 to 55% by mole of ethylene glycol component units.

The polyester resin A may contain, as the diol component units thereof, a small amount of diol component units other than the glycol component units having the cyclic ether structure and the ethylene glycol component units. The diol component units are not particularly limited, and examples thereof include diol component units each derived from the following: an aliphatic diol such as trimethylene glycol, 2-methylpropanediol, 1,4-butanediol, 1,5-pentanediol, 1,6-hexanediol, diethylene glycol, triethylene glycol, propylene glycol, or neopentyl glycol; a polyether compound such as polyethylene glycol, polypropylene glycol, or polybutylene glycol; a trihydric or higher polyhydric alcohol such as glycerin, trimethylolpropane, or pentaerythritol; an alicyclic diol such as 1,3-cyclohexanedimethanol, 1,4-cyclohexanedimethanol, 1,2-decahydronaphthalene dimethanol, 1,3-decahydronaphthalene dimethanol, 1,4-decahydronaphthalene dimethanol, 1,5-decahydronaphthalene dimethanol, 1,6-decahydronaphthalene dimethanol, 2,7-decahydronaphthalene dimethanol, tetralin dimethanol, norbornane dimethanol, tricyclodecane dimethanol, 5-methylol-5-ethyl-2-(1,1-dimethyl-2-hydroxyethyl)-1,3-dioxan e, or pentacyclododecane dimethanol; an alkylene oxide adduct of a bisphenol such as 2,2-bis(4-hydroxyphenyl) propane (bisphenol A), bis(4-hydroxyphenyl)methane (bisphenol F), 1,1'-bis (4-hydroxyphenyl)cyclohexane (bisphenol Z), or bis (4-hydroxyphenyl) sulfone (bisphenol S) ; or an alkylene oxide adduct of an aromatic dihydroxy compound such as hydroquinone, resorcin, 4,4'-dihydroxybiphenyl, 4,4'-dihydroxydiphenyl ether, or 4,4'-dihydroxydiphenylbenzophenone. The content by percentage thereof is preferably 10% or less by mole of the diol component units.

The polyester resin A may contain, as a dicarboxylic acid component thereof, dicarboxylic acid component units other than the terephthalic acid component units. Examples of the dicarboxylic acid usable other than terephthalic acid include isophthalic acid, phthalic acid, 2-methylterephthalic acid, naphthalenedicarboxylic acid, biphenyldicarboxylic acid, tetralindicarboxylic acid, succinic acid, glutaric acid, adipic acid, pimelic acid, suberic acid, azelaic acid, sebacic acid, dodecadicarboxylic acid, cyclohexanedicarboxylic acid, decalindicarboxylic acid, norbornanedicarboxylic acid, tricyclodecanedicarboxylic acid, pentacyclododecanedicarboxylic acid, isophoronedicarboxylic acid, 3,9-bis(2-carboxyethyl)-2,4,8,10-tetraoxaspiro[5.5]undecene, trimellitic acid, trimesic acid, pyromellitic acid, and tricarballylic acid; and

dicarboxylic acids derived from esters thereof. The content by percentage thereof is preferably 20% or less by mole of the dicarboxylic acid component units.

The polyester resin A is preferably a resin satisfying the following: a value of 0 to 5 J/g is the calorific value of an exothermic peak associated with crystallization of the polyester resin in a DSC curve thereof that is obtained by keeping the polyester resin at 300°C for 10 minutes and subsequently cooling the resin at a cooling rate of 10°C/minute by heat flux differential scanning calorimetry (hereinafter referred to as DSC measurement) according to JIS K 7122(1987). The fact that the exothermic peak is small or no exothermic peak is observed means that under the above-mentioned cooling condition the polyester resin A is hardly crystallized or is not crystallized at all, so that the crystallization rate of the polyester resin A is extremely slow or the polyester resin A is non-crystalline or very slightly crystalline.

When the calorific value of the exothermic peak is 5 J/g or less, the polyester resin is particularly good in the property of extruding and foaming the polycarbonate resin, and can further give a foam better in mechanical properties and thermal insulation properties. From this viewpoint, the calorific value of the exothermic peak is more preferably a value of 0 to 3 J/g, more preferably a value of zero. The polyester resin A used in the invention may be a resin which does not show a clear melting point; thus, a temperature of 300°C is adopted as the temperature at which the resin is kept in the DSC measurement. The rate of raising the temperature from normal temperature to 300°C is not particularly limited, and is preferably 10°C/minute. The inflow rate of nitrogen gas is set to 50 mL/minute.

The blowing agent used in the invention may be an organic physical blowing agent, or an inorganic physical blowing agent. Examples of the organic physical blowing agent include aliphatic hydrocarbons such as propane, n-butane, isobutane, n-pentane, isopentane, and hexane; alicyclic hydrocarbons such as cyclobutane, cyclopentane, and cyclohexane; aromatic hydrocarbons such as benzene, toluene, and xylene; aliphatic ketones such as acetone, and ethyl methyl ketone; halogenated hydrocarbons such as 1-chloro-1,1-difluoroethane, pentafluoroethane, 1,1,1,2-tetrafluoroethane, 1,1-difluoroethane, ethyl chloride, and methyl chloride; and ether such as dimethyl ether, ethyl methyl ether, and diethyl ether. The inorganic physical blowing agent is preferably, for example, carbon dioxide, air, or nitrogen. These blowing agents may be used alone or in the form of a mixture of two or more thereof.

The use amount of the blowing agent is decided in accordance with the species of the agent, a desired apparent density (expansion ratio) and/or some other. In order to produce a foam having an apparent density of 40 to 400 $kg/m^3$, the use amount of the organic physical blowing agent and that of the inorganic physical blowing agent are usually from 0.5 to 10 parts by weight, and from 0.3 to 15 parts by weight, respectively, for 100 parts by weight of the base resin.

In the producing process of the invention, a specific branching agent is added to the base resin since the foamability and moldability of the polycarbonate resin is further improved so that a foam having a high expansion ratio and a high closed cell volume percentage can easily be produced. The branching agent is an acrylic polymer having an epoxy group. It is assumed that the reason why the branching agent makes an improvement in the foamability and moldability of the polycarbonate resin is as follows: the epoxy groups of the branching agent are bonded to molecular terminals of the polycarbonate resin so that the resin is modified, whereby a branched structure is introduced into the molecular structure of the polycarbonate resin when the resin is a linear; or when the polycarbonate resin is a branched polycarbonate resin, the branched structure is turned to have a further multi-branched structure.

The acrylic polymer having the epoxy group is, for example, a polymer made from an acrylic monomer having an epoxy group; or a copolymer made from an acrylic monomer having an epoxy group, and a different co-polymerizable monomer, the content by percentage of units of the monomer having the epoxy group being 5% or more by weight. The content by percentage of the monomer units having the epoxy group is preferably from 5 to 95% by weight, more preferably from 10 to 50% by weight, even more preferably from 15 to 40% by weight. When the content by percentage of units of the acrylic monomer units having the epoxy group is in the range, a branched structure can be effectively introduced into the molecular structure of the polycarbonate resin.

Examples of the acrylic monomer having the epoxy group include glycidyl acrylate, glycidyl methacrylate, and (meth)acrylates having a cyclohexene oxide structure.

Examples of the co-polymerizable monomer include alkyl (meth) acrylates having an alkyl group having 1 to 22 carbon atoms, such as methyl (meth)acrylate, ethyl (meth)acrylate, propyl (meth)acrylate, butyl (meth)acrylate, 2-ethylhexyl (meth)acrylate and cyclohexyl (meth)acrylate, polyalkylene glycol esters of (meth) acrylic acid, alkoxyalkyl (meth) acrylates, hydroxyalkyl (meth)acrylates, dialkylaminoalkyl (meth)acrylates, benzyl (meth)acrylate, phenoxyalkyl (meth) acrylates, isobornyl (meth) acrylate, and alkoxysilylalkyl (meth)acrylates. Other examples thereof include maleic anhydride, fumaric acid, (meth)acrylamide, (meth)acryldialkylamide, vinyl esters such as vinyl acetate, vinyl ethers, (meth)allyl ethers, aromatic vinyl monomers such as styrene and $\alpha$-methylstyrene, and olefin monomers such as ethylene and propylene. These may be used alone or in combination of two or more thereof. The wording "(meth)acrylate" means a generic term of acylate and methacrylate.

The branching agent is preferably any one of acrylic copolymers that have 10 to 50% by weight of acrylic monomer units each having an epoxy group, and are products commercially available as "ARUFON UG"(trade name) series from Toagosei Co., Ltd. Of these products, products "ARUFON UG-4030", "ARUFON UG-4035", and "ARUFON UG-4040" are particularly preferred.

The branching agent is used in an amount preferably from 0.05 to 30 parts by weight, more preferably from 0.1 to 20 parts by weight, even more preferably from 0.2 to 10 parts by weight for 100 parts by weight of the polycarbonate resin. When the use amount of the branching agent is in the range, the foamability and moldability of the modified polycarbonate resin becomes in particular good.

If necessary, various additives may be appropriately added to the base resin in the invention, examples of the additives including a cell diameter adjusting agent, colorants such as pigments and dyes, a heat stabilizer, a filler, an ultraviolet absorbent, and a flame retardant.

Examples of the cell diameter adjusting agent include powdery inorganic substances such talc, kaolin, mica, silica, calcium carbonate, barium sulfate, titanium oxide, aluminum oxide, clay, bentonite, and diatomaceous earth; and chemical blowing agents known in the prior art, such as azodicarbodiamide. Of these cell diameter adjusting agent, preferred is talc, which makes the adjustment of the cell diameter easy without hindering the flame retardancy of the foam. Particularly preferred is talc having a particle diameter of 0.1 to 20 $\mu$m, in particular, 0.5 to 15 $\mu$m, the particle diameter being prescribed in JIS Z 8901 (2006). The addition amount of the cell diameter adjusting agent, which is varied in accordance with the species of the cell diameter adjusting agent, a target cell diameter and/or some other, is preferably from about 0.01 to 8 parts by weight, more preferably from about 0.01 to 5 parts by weight, in particular preferably from about 0.05 to 3 parts by weight for 100 parts by weight of the base resin.

From the viewpoint of the dispersibility of the cell diameter adjusting agent in the base resin, it is preferred to use the cell diameter adjusting agent in the form of a master batch. In a case of using, for example, talc as the cell diameter adjusting agent, the master batch containing the cell diameter adjusting agent is prepared by adjusting the talc content by percentage in the base resin of the master batch preferably into the range of 20 to 80% by weight, more preferably into that of 30 to 70% by weight.

In the producing process of the invention, a polycarbonate resin extruded foam in the form of a board is obtained by kneading the polycarbonate resin, the polyester resin, and the blowing agent in an extruder to prepare a foamable melted resin, and extruding and foaming the melted resin through a die attached to an outlet in the extruder. When the extruded foam board is produced, the following method is adopted: a method (1) of extruding and foaming the foamable melted resin from a flat die to a forming tool composed of upper and lower plates or upper and lower belt conveyor, thereby shaping the resin into a board form.

The foam obtained by the producing process of the invention is used as a heat insulating material, and the foam is in a board form. The method (1), wherein a flat die is used, is adopted since the foam in the form of a board having a particularly larger thickness is easily obtained.

Hereinafter, a description will be made about various physical properties of any polycarbonate resin extruded foam obtained by the producing process of the invention (hereinafter referred to merely as the polycarbonate resin extruded foam).

(i) Apparent density

The apparent density of the polycarbonate resin extruded foam is preferably from 40 to 400 kg/$m^3$, more preferably from 40 to 300 kg/$m^3$, even more preferably from 45 to 200 kg/$m^3$, in particular preferably from 50 to 150 kg/$m^3$. If the apparent density is too small, it is originally difficult to produce an extruded foam, and the mechanical strength is insufficient in accordance with the use purpose thereof. On the other hand, if the apparent density is too large, the extruded foam does not easily exhibit a sufficient thermal insulation properties unless the thickness of the extruded foam is made considerably large. Moreover, an unfavorable result is obtained from the viewpoint of lightness. In short, when the apparent density of the foam is in the range, the foam is favorably particularly good in balance between thermal insulation properties and mechanical strength.

(ii) Thickness

When the foam is used, in particular, for a heat insulating material for building, the thickness of the polycarbonate resin extruded foam is preferably 10 mm or more, more preferably 20 mm or more. On the other hand, if the thickness is too large, foaming shaping for attaining the thickness may be difficult, dependently on the size of an extruder therefor. The upper limit thereof is preferably about 120 mm.

(iii) Average cell diameter

The average cell diameter in the thickness direction of the polycarbonate resin extruded foam is preferably from 0.05 to 3 mm, more preferably from 0.1 to 3 mm, even more preferably from 0.5 to 2 mm. When the average cell diameter is in the range, the extruded foam has a smooth surface and has original physical properties of polycarbonate resin, such as compression strength thereof. Furthermore, the extruded foam can have a still higher thermal insulation

properties, for example, because the foam can restrain infrared rays from penetrating therethrough.

A method for measuring the average cell diameter is as follows:

The average cell diameter in the thickness direction $D_T$ (mm) of any extruded foam, and the average cell diameter in the width direction $D_W$ (mm) of the extruded foam are obtained from a perpendicular (or non-oblique) section in the width direction of the extruded foam (perpendicular section orthogonal to the extruding direction of the extruded foam). The average cell diameter in the extruding direction $D_L$ (mm) of the extruded foam is obtained from a perpendicular section in the extruding direction of the extruded foam (perpendicular section of the extruded foam that is parallel to the extruding direction of the extruded foam, and makes the foam into halves at the center in the width direction).

An enlarged photograph of each of the sections is obtained through a microscope or some other. Next, a straight line is drawn on the enlarged photograph in a direction along which a measurement is to be made, and then the number of cells that cross the straight line is counted. The length of this straight line (naturally, this length denotes not the length of the straight line on the enlarged photograph but a true length of the straight line, which is obtained in consideration of the magnification of the photograph) is divided by the number of the counted cells. In this way, the average cell diameter is obtained in each of the directions.

The method for measuring each of the average cell diameters is described in detail.

Sites where the average cell diameter $D_T$ (mm) in the thickness direction is measured are rendered three sites, that is, a central site in the width direction of a perpendicular section in the width direction of the extruded foam, and both end sites thereof. In an enlarged photograph of each of the sites, a straight line over the entire thickness of the extruded foam is drawn in the thickness direction of the extruded foam. From the length of the straight line, and the number of cells crossing the straight line, the average diameter of the cells present on the straight line (the length of the straight line/the number of the cells crossing the straight line) is obtained. The arithmetic average of the average diameters at the three sites is defined as the average cell diameter $D_T$(mm) in the thickness direction.

Sites where the average cell diameter $D_W$ (mm) in the width direction is measured are rendered the three sites, that is, the central site in the width direction of the perpendicular section in the width direction of the extruded foam, and both the end sites thereof. In the enlarged photograph of each of the sites, a straight line having a length obtained by multiplying a length of 3 cm by the magnification is drawn in the width direction and at a position where the extruded foam is cut into halves in the thickness direction. From the length of the straight line, and the number of cells crossing the straight line, the average diameter of the cells present on the straight line is calculated from the following expression: "3 cm/(the number of the cells crossing the straight line - 1)". The arithmetic average of the average diameters at the three sites is defined as the average cell diameter $D_W$ (mm) in the width direction.

Sites where the average cell diameter $D_L$ (mm) in the extruding direction is measured are rendered three sites, that is, a central site in the extruding direction of a perpendicular section in the extruding direction of the extruded foam, the section being obtained by cutting the extruded foam in the extruding direction, and both end sites thereof. In an enlarged photograph of each of the sites, a straight line having a length obtained by multiplying a length of 3 cm by the magnification is drawn in the extruding direction and at a position where the extruded foam is cut into halves in the thickness direction. From the length of the straight line, and the number of cells crossing the straight line, the average diameter of the cells present on the straight line is calculated from the following expression: "3 cm / (the number of the cells crossing the straight line - 1) ". The arithmetic average of the average diameters at the three sites is defined as the average cell diameter $D_L$ (mm) in the extruding direction.

The average cell diameter $D_H$ (mm) in the horizontal direction of the extruded foam is defined as the arithmetic average of $D_W$ and $D_L$.

(iv) Cell deformation ratio

In the polycarbonate resin extruded foam, the cell deformation ratio is preferably from 0.6 to 1.5. The cell deformation ratio is a value calculated out by dividing $D_T$ by $D_H$ (a value of $D_T/D_H$), $D_T$ and $D_H$ being obtained in the above-mentioned measurement method. As the cell deformation ratio is smaller than one, the cell is flatter. As the ratio is larger than one, the cell is longer in the thickness direction. The cell deformation ratio is more preferably from 0.7 to 1.2, even more preferably from 0.8 to 1.0. When the cell deformation ratio is in the range, the extruded foam has a very good balance between mechanical strength and thermal insulation properties.

The shape of the cells of the extruded foam, and the average cell diameter in the thickness direction can be adjusted by adjusting the pulling-out speed at the time of the extrusion foaming, the temperature of the forming tool, the interval between a pair of the upper and lower plates, the interval between the belt conveyors, and/or some other. The average cell diameter may also be adjusted by adjusting the addition amount of the cell diameter adjusting agent.

(v) Volume percentage of closed cell

The volume percentage of closed cells in the polycarbonate resin extruded foam board is preferably 50% or

more, more preferably 60% or more, even more preferably 70% or more, in particular preferably 80% or more. As the closed cell volume percentage is higher, the extruded foam can maintain a higher thermal insulation properties, and is further better in mechanical properties such as compression strength. The closed cell volume percentage S (%) is obtained by using an air-picnometer (such as an air-picnometer (model number: 930) manufactured by Toshiba Beckman Co., Ltd.) to measure the true volume $V_x$ of the extruded foam in accordance with the procedure C in ASTM-D2856-70, and calculating the percentage S from an equation (1) described below, using the true volume $V_x$.

From three sites of the extruded foam, that is, a central site and sites near both ends of the width direction thereof, cut samples are cut out, respectively. Each of the cut samples is used as a measuring sample. About each of the measuring samples, the closed cell volume percentage is measured. The arithmetic average of the closed cell volume percentages at the three sites is adopted. Each of the cut samples is rendered a sample cut into a size of 25 mm in length x 25 mm in width x 20 mm in thickness from the extruded foam. However, when the extruded foam is thin so that a sample 20 mm in thickness cannot be cut out in the thickness direction, samples (cut samples) each cut into, for example, a size having a length of 25 mm, a width of 25 mm and a thickness equal to the thickness of the extruded foam are stacked on each other in such a manner that the total thickness thereof is closest to 20 mm, and then the closed cell volume percentage is measured.

$$S(\%) = (V_x - W/\rho) \times 100/(V_A - W/\rho) \quad (1)$$

In the equation (1), $V_x$: the true volume ($cm^3$) of each of the cut samples that is obtained by the measurement with the air-picnometer (the true volume corresponds to the sum of the volume of the resin constituting the cut sample of the extruded foam, and the total volume of all cells in the closed cell region of the cut sample);
$V_A$: the apparent volume ($cm^3$) of the cut sample that is calculated out from the external dimension of the cut sample used in the measurement;
W: the total weight (g) of the cut sample used in the measurement; and
p: the density ($g/cm^3$) of the resin constituting the extruded foam.

(vi) Thermal conductivity

The thermal conductivity of any polycarbonate resin extruded foam in the specification is a value measured by the heat flow meter apparatus method (single-test-piece/symmetric structure manner; temperature: 38°C at the high-temperature side, and 8°C at the low-temperature side; and average temperature: 23°C) described in JIS A 1412-2 (1999). When an accelerating test described below is made according to ISO 11561, the thermal conductivity of the extruded foam after a long term elapses from the production thereof can be evaluated. According to this method, for example, when a foam 30 mm in thickness is sliced into a piece 10 mm in thickness just after the production thereof and the thermal conductivity of the sliced foam is measured after 16 days from the production, this thermal conductivity corresponds to the thermal conductivity of the foam 30 mm in thickness after 150 days therefrom.

(vii) Remaining blowing agent amount

The remaining amount of the blowing agent, such as a hydrocarbon, in any foam in the specification is a value measured by the internal standard method using gas chromatography. Specifically, a sample having an appropriate amount is cut out from any extruded foam, and this sample is put into a cap-attached sample bottle in which an appropriate volume of toluene and an internal standard substance are held. The bottle is capped, and then the contents are sufficiently stirred to dissolve the blowing agent in the foam into toluene. The resultant solution is used as a measuring sample to be subjected to gas chromatographic analysis. In this way, the remaining blowing agent amount in the foam is obtained. When the foam is sliced just after the production thereof in the same way as in the item (vi), the remaining blowing agent amount after a long term elapses from the production can be evaluated.

Examples

Hereinafter, the invention will be specifically described by examples and comparative examples.
Hereinafter, evaluating methods will be described.

(i) Apparent density

The apparent density of any extruded foam was measured according to JIS K 6767 (1999). From each of three

sites of the extruded foam, that is, a central site in the width direction of the foam, and sites near both ends in the width direction thereof, a rectangular-parallelepiped test piece having the same thickness as the foam had was cut out. About each of the test pieces, the apparent density was measured. The arithmetic average of the measured values at the three sites was defined as the apparent density.

(ii) Sectional area

The sectional area of a perpendicular section crossing the extruding direction (perpendicular section in the width direction) of any extruded foam was defined as the sectional area of the extruded foam.

(iii) Thickness

The thickness of any extruded foam was measured as follows: Measuring points were decided in the extruded foam, these points being five sites of the extruded foam through which the width of the extruded foam was cut into 6 sections equal to each other in length. The thickness of the extruded foam, which was a heat insulating plate, was measured at each of the 5 measuring points. The arithmetic average of the measured values at the 5 sites was defined as the thickness of the extruded foam.

(iv) Compression property (Compressive stress at 10% relative deformation)

The compressive stress of any extruded foam is a value measured by the following method: After 5 days elapsed from the production of the foam, from a central region in the width direction of the extruded foam, a rectangular-parallelepiped test piece having a size of 50 mm in the extruding direction and a size of 50 mm in the width direction was cut out. At this time, the central region in the width direction of the extruded foam was made consistent with that in the width direction of the test piece. Furthermore, shaped skins present in the upper and lower surfaces of the test piece were equally cut and removed to set the thickness of the test piece to 25 mm. Next, according to JIS K 7220 (1999), about this test piece, from which the shaped skins had been removed, a measurement was made about the load when the piece was subjected to 10% compression at a compression rate of 10% x T mm/minute, wherein T represents the initial thickness of the test piece. When this load was divided by the pressure-received area of the test piece, the compressive stress was obtained.

(v) Flexural properties (Flexural strength, and Flexural modulus)

Bending properties of any extruded foam were measured in accordance with JIS K 7221-2 (1999). From a central region of the extruded foam, which was in a plate form, after 5 days from the production, a rectangular-parallelepiped test piece having a length of 200 mm and a width of 50 mm was cut out. At this time, the cutting was attained in such a manner that the length direction of the test piece was along the width direction of the extruded foam and further the center in the width direction thereof was consistent with the center of the length of the test piece. Furthermore, shaped skins present in the upper and lower surfaces of the test piece were equally cut and removed to set the thickness of the test piece to 25 mm. This test piece was used to make a flexural test under conditions that the respective radii of a pressuring wedge and a front end region of a supporting stand were 10 mm, the distance between supporting points was 150 mm, and the testing rate was 10 mm/minute, thereby obtaining the flexural strength and the flexural modulus.

(vi) Thermal conductivity, and remaining blowing agent amount

Any foam just after the production thereof was equally cut from the upper and lower surfaces to produce a measuring sample in which a center region of the foam that had a thickness of 10 mm was left. This was stored in an environment having a constant temperature of 23°C and a constant humidity of 50%. After 16 days elapsed from the production, the thermal conductivity of the foam and the remaining blowing agent amount therein were measured by the above-mentioned measuring methods. A sample for measuring the remaining blowing agent amount was cut out from the vicinity of the center of the foam after the thermal conductivity was measured. These measured values correspond to the thermal conductivity and the remaining blowing agent amount after 150 days elapsed from the production of a foam having a thickness of 30 mm.

Methods for measuring the closed cell volume percentage, the average cell diameter in the thickness direction, and the cell deformation ratio of any extruded foam were as described above.

Polycarbonate resins used in the examples and the comparative examples

[Table 1]

| Abbreviation | Maker | Grade | Melt tension *2 | Melt viscosity *3 | Flexural modulus |
|---|---|---|---|---|---|
| | | | (cN) | (Pa·s) | (MPa) |
| PCA | Mitsubishi Engineering Plastics Corp. | NOVAREX M7027BF | 22 | 31000 | 2100 |
| PCB *1 | - | - | 17 | 13000 | 2100 |

*1 PCB was a resin obtained by using a biaxial extruder having an inside diameter of 47 mm to re-pelletize, at an extruder setting temperature of 280°C and an extruding-out amount of 30 kg/hour, a material in which 0.5% by weight of a branching agent (trade name: ARUFON UG-4035, manufactured by Toagosei Co., Ltd.) was added to the resin PCA, and then re-pelletize the resultant again at an extruder setting temperature of 280°C and an extruding-out amount of 30 kg/hour.
*2 Value at 250°C
*3 Value at 210°C and an angular frequency of 6.3 rad/second

Polyester resins used in the examples and the comparative examples

[Table 2]

| Abbreviation | Maker | Grade | Composition *1 | | Melt Viscosity *2 | Calorific value of an exothermic peak in DSC curve | Flexural modulus |
|---|---|---|---|---|---|---|---|
| | | | Diol component (percentage by mole) | Dicarboxylic acid component (percentage by mole) | (Pa·s) | (J/g) | (MPa) |
| SPET20 | Mitsubishi Gas Chemical Co., Inc. | ALTESTER20 | EG/SPG=80/20 | Terephtalic acid=100 | 5200 | 0 | 2200 |
| SPET30 | Mitsubishi Gas Chemical Co., Inc. | ALTESTER30 | EG/SPG=70/30 | Terephtalic acid=100 | 5200 | 0 | 2200 |
| SPET45 | Mitsubishi Gas Chemical Co., Inc. | ALTESTER45 | EG/SPG=55/45 | Terephtalic acid=100 | 8500 | 0 | 2200 |
| PETG | Eastman Chemical Co. | GN001 | EG/CHDM=67/33 | Terephtalic acid=100 | 4600 | 0 | 1900 |

*1 EG: Ethylene glycol, SPG: Spiroglycol, CHDM: Cyclohexane dimethanol
*2 Value at 210°C and an angular frequency of 6.3 rad/second

In Table 1, "PCA" denotes a polycarbonate resin; and in Table 2, any "SPET" a co-condensed polyester resin (polyester copolymer) containing dicarboxylic acid component units each made of phthalic acid, and diol component units each made of ethylene glycol/spiroglycol. SPET 20, SPET 30 and SPET 45 are polyester resins wherein the content by percentage of spiroglycol in the diol components is 20% by mole, 30% by mole and 45% by mole, respectively. "PETG" denotes a co-condensed polyester resin (polyester copolymer) containing dicarboxylic acid component units each made of terephthalic acid, and diol component units each made of ethylene glycol/cyclohexanedimethanol. The resin is a co-condensed polyester resin (polyester copolymer) wherein the content by percentage of cyclohexanedimethanol in the diol component units is 33% by mole.

The melt viscosity at 210°C of each of the polycarbonate resins and the polyester resins was measured by use of a viscoelasticity measuring device (trade name: ARES, manufactured by Rheometric Scientific, Inc.) under the following measuring conditions:

Geometry: parallel plates (diameter: 15 mm)
Plate interval: 1.5 mm
Angular frequency: 6.3 rad/second
Temperature condition: each of the resins was cooled from 300°C to 140°C at a cooling rate of 10°C/minute; the melt viscosity at 210°C was adopted.

The melt tension at 250°C of each of the polycarbonate resins and the polyester resins was measured by use of a measuring device (trade name: Capirograph 1D) manufactured by Toyo Seiki Seisaku-Sho, Ltd.

In the measurement of the melt viscosity and the melt tension, raw material pellets dried at 120°C for 12 hours were used.

The calorific value of an exothermic peak in any DSC curve was measured by the above-mentioned method according to JIS K 7122 (1987).

Examples 1 to 4, and Comparative Examples 1 to 4

Use was made of a producing machine in which a first extruder 65 mm in inside diameter was connected in series to a second extruder 90 mm in inside diameter. In the vicinity of the terminal end of the first extruder was made a blowing agent injecting port. To an outlet in the second extruder was connected a flat die having a rectangular resin outlet (die lip) having a width-direction cross-section having a gap of 3 mm and a width of 65 mm.

To the resin outlet in the flat die was attached a guider made of a pair of upper and lower polytetrafluoroethylene plates arranged in parallel to each other at an interval of 30 mm.

The following components were supplied into the first extruder to set the amounts thereof to amounts in each of examples (i.e., examples and comparative examples) shown in Table 3 or 4: a polycarbonate resin, a polyester resin, a blowing agent, and an optional branching agent (trade name: ARUFON UG-4035, manufactured by Toagosei Co., Ltd.). These components were heated to 280°C to be melted, and then kneaded. From the blowing agent injecting port, physical blowing agent having a blend composition shown in the example in Table 3 or 4 was supplied in an amount shown in the example in the table into the first extruder. Furthermore, the mixture was melted and kneaded. At the subsequent second extruder, the temperature of the foamable melted resin was adjusted to about 210°C of a temperature suitable for foaming (this resin temperature was the temperature of the foamable melted resin that was measured at a position where the extruder and the die were jointed with each other). This melted resin was then extruded from the die lip to the guider at an extruding-out amount of 50 kg/hour. In this way, the melted resin was passed through the guider while the resin was foamed. In this way, the resin was formed into a board form to produce each polycarbonate resin extruded foam board. The used cell diameter adjusting agent was talc (trade name: Hi-Filler #12, manufactured by Matsumura Sangyo KK). The evaluation results are shown in Table 3 or 4.

[Table 3]

| | | | | | Example 1 | Comparative Example 1 |
|---|---|---|---|---|---|---|
| Production conditions | Polycarbonate resin | Species | | - | PCA/PCB | PCA/PCB |
| | | Blend ratio | | (ratio by weight) | 70/30 | 70/30 |
| | Polyester resin | Species | | - | SPET45 | - |
| | | Blend amount | | weight by parts | 25 | 0 |
| | Blowing agent | Species | c-P | (ratio by mole) | 50 | 50 |
| | | | n-B | (ratio by mole) | 50 | 50 |
| | | Addition amount | | mole/kg | 0.4 | 0.4 |
| | Cell diameter adjusting agent | | | weight by parts | 0.05 | 0.05 |
| Extruded foam valuation | Apparent density | | | $kg/m^3$ | 120 | 120 |
| | Thickness | | | mm | 30 | 30 |
| | Sectional area | | | $cm^2$ | 60 | 60 |
| | Closed cell volume percentage | | | % | 75 | 72 |
| | Compressive stress at 10% relative deformation | | | $N/cm^2$ | 55 | 50 |
| | Flexural strength | | | $N/cm^2$ | 180 | 165 |
| | Flexural modulus | | | $N/cm^2$ | 3700 | 3300 |
| | Thermal conductivity (corresponding to value after 150 days ) | | | W/(m•K) | 0.0390 | 0.0420 |
| | Thickness-direction average cell diameter | | | mm | 0.7 | 0.7 |
| | Cell deformation ratio | | | - | 0.8 | 0.8 |
| | Remaining blowing agent amount (corresponding to value after 150 days) | | | wt% | 1.6 | 1.4 |

[Table 4]

| | | | | | Example 2 | Example 3 | Example 4 | Comparative Example 2 | Comparative Example 3 | Comparative Example 4 |
|---|---|---|---|---|---|---|---|---|---|---|
| Production conditions | Polycarbonate resin | Species | | - | PCA/PCB | PCA/PCB | PCA/PCB | PCA/PCB | PCA/PCB | PCA/PCB |
| | | Blend ratio | | (ratio by weight) | 70/30 | 70/30 | 70/30 | 70/30 | 70/30 | 70/30 |
| | Polyester resin | Species | | - | SPET45 | SPET30 | SPET45 | - | SPET20 | PETG |
| | | Blend amount | | weight by parts | 25 | 25 | 66 | 0 | 25 | 25 |
| | Blowing agent | Species | c-P | (ratio by mole) | 50 | 50 | 50 | 50 | 50 | 50 |
| | | | n-B | (ratio by mole) | 50 | 50 | 50 | 50 | 50 | 50 |
| | | Addition amount | | mole/kg | 0.5 | 0.5 | 0.5 | 0.5 | 0.5 | 0.5 |
| | Branching agent | | | weight by parts | 0.5 | 0.5 | 0.5 | 0.5 | 0.5 | 0.5 |
| | Cell diameter adjusting agent | | | weight by parts | 0.05 | 0.05 | 0.05 | 0.05 | 0.07 | 0.07 |
| Extruded foam Valuation | Apparent density | | | $kg/m^3$ | 92 | 92 | 92 | 92 | 92 | 92 |
| | Thickness | | | mm | 30 | 30 | 30 | 30 | 30 | 30 |
| | Sectional area | | | $cm^2$ | 60 | 60 | 60 | 60 | 60 | 60 |
| | Closed cell volume percentage | | | % | 80 | 82 | 78 | 74 | 4 | 72 |
| | Compressive stress 10% relative deformation | | | $N/cm^2$ | 35 | 40 | 30 | 30 | 25 | 26 |
| | Flexural strength | | | $N/cm^2$ | 145 | 150 | 120 | 120 | 115 | 115 |
| | Flexural modulus | | | $N/cm^2$ | 4300 | 4100 | 3800 | 3300 | 2800 | 2700 |
| | Thermal conductivity (corresponding to value after 150 days ) | | | W/(m•K) | 0.0363 | 0.0365 | 0.0350 | 0.0389 | 0.0389 | 0.0389 |
| | Thickness-direction average cell diameter | | | mm | 0.7 | 0.7 | 0.7 | 0.7 | 0.7 | 0.7 |
| | Cell deformation ratio | | | - | 0.8 | 0.8 | 0.8 | 0.8 | 0.8 | 0.8 |
| | Remaining blowing agent amount (corresponding to value after 150 days) | | | wt% | 1.7 | 1.6 | 1.8 | 1.4 | 1.4 | 1.4 |

A numerical value in the sub-section "blend amount" of the section "polyester resin" in each of Tables 3 and 4 represents parts by weight for 100 parts by weight of the corresponding polycarbonate resin.

The symbols "c-P" and "n-B" in the sub-section "species" of the section "blowing agent" in each of Tables 3 and 4 denote cyclopentane and n-butane, respectively. A numerical value in the section of each of the examples that corresponds to the sub-section "species" of the section "blowing agent" represents the ratio by mole of c-P or n-B. A numerical value in the sub-section "addition amount" of the section "blowing agent" represents the mole number of the blowing agent to 1 kg of the mixture of the "polycarbonate resin" and "polyester resin".

Example 1 should be compared with Comparative Example 1, and Examples 2 to 4 should be compared with Comparative Example 2. Comparative Examples 1 and 2 are each an example into which no polyester resin is blended. In each of Examples 1 to 4, the specific polyester resin is blended, so that the resultant foam is lower in thermal conductivity and is far better in mechanical properties than the foam of the corresponding Comparative Example although these foams have substantially the same apparent density and thickness.

Comparative Example 3 is an example wherein use is made of a polyester resin wherein the content by percentage of the glycol component units having the cyclic ether structure is small. In the foam produced in this comparative example, the thermal conductivity is similar to that of Comparative Example 2, wherein no polyester resin is blended, so that no thermal conductivity-decreasing effect is observed. Furthermore, the mechanical properties thereof are also lower than those of the foam produced in Comparative Example 2 probably because the foamability is lowered.

Comparative Example 4 is an example wherein use is made of a polyester resin that is noncrystalline but contains no glycol component units having the cyclic ether structure. In the same manner as in Comparative Example 3, no thermal conductivity-decreasing effect is observed, and the mechanical properties thereof are also lower than those of the foam produced in Comparative Example 2.

Example 5

Use was made of a producing machine in which a first extruder 65 mm in inside diameter was connected in series to a second extruder 90 mm in inside diameter. In the vicinity of the terminal end of the first extruder was made a blowing agent injecting port. To an outlet in the second extruder was connected a circular die having a resin outlet (die lip) having a diameter of 60 mm and a gap of 0.3 mm.

PCA as a polycarbonate resin, and the following components were supplied into the first extruder: 20 parts by weight of SPET 45 as a polyester resin, 0.3 parts by weight of a branching agent (trade name: ARUFON UG-4035, manufactured by Toagosei Co., Ltd.), and 2.3 parts by weight of talc (trade name: Hi-Filler #12, manufactured by Matsumura Sangyo KK) as a cell diameter adjusting agent, these amounts being each an amount for 100 parts by weight of the polycarbonate PCA. These components were heated to 280°C to be melted, and then kneaded. Next, from the blowing agent injecting port, carbon dioxide as a blowing agent was supplied in an amount of 0.06 mole for 1 kg of the mixture of the polycarbonate resin and the polyester resin into the first extruder. Furthermore, the mixture was melted and kneaded. At the subsequent second extruder, the temperature of the foaming melted resin was adjusted to about 240°C of a temperature suitable for foaming (this resin temperature was the temperature of the foaming melted resin that was measured at a position where the extruder and the die were jointed with each other). This melted resin was then extruded from the die lip at an extruding-out amount of 50 kg/hour to form a cylindrical foam. While this cylindrical foam was pulled out along a columnar cooler having a diameter of 150 mm, the foam was cut along the extruding direction, and spread. In this way, a polycarbonate resin extruded foam sheet was produced.

About the resultant polycarbonate resin extruded foam sheet, the apparent density was 300 kg/$m^3$, the thickness was 1.4 mm, the closed cell volume percentage was 88%, the average cell diameter in the thickness direction was 0.12 mm, and the cell deformation ratio was 0.5.

About conventional polycarbonate resin foams in which only a polycarbonate resin is foamed without blending any specific polyester resin into the polycarbonate resin, their closed cell volume percentages are easily lowered when an attempt of making their cell diameters small is made. However, in Example 5, the extruded foam having a large closed cell volume percentage is produced even when the cell diameter thereof is made small.

## Claims

1. A process of extruding and foaming a foamable melted resin obtained by kneading a polycarbonate resin, a polyester resin, and a blowing agent, extruding and foaming the foamable melted resin from a flat die to a forming tool composed of upper and lower plates, or upper and lower belts conveyor, thereby producing a polycarbonate resin extruded foam board having thermal insulation properties, wherein the polyester resin is a polyester copolymer comprising more than one diol component units which contain therein glycol component units having a cyclic ether structure in an amount of 25 to 50% by mole of the diol component units, and one or more dicarboxylic acid component units,

and the polycarbonate resin includes a modified polycarbonate resin modified with a branching agent comprising an acrylic polymer having an epoxy group, and the blend amount of the polyester resin is from 5 to 100 parts by weight for 100 parts by weight of the polycarbonate resin.

**2.** The process according to claim 1 for producing a polycarbonate resin extruded foam board having thermal insulation properties, wherein the percentage by mole of the glycol component units having the cyclic ester structure in the diol component units is from 30 to 45% by mole.

**3.** The process according to claim 1 for producing a polycarbonate resin extruded foam board having thermal insulation properties, wherein the blend amount of the polyester resin is from 10 to 70 parts by weight for 100 parts by weight of the polycarbonate resin.

**4.** The process according to claim 1 for producing a polycarbonate resin extruded foam board having thermal insulation properties, wherein the diol component units comprise 25 to 50% by mole of 3,9-bis (1,1-dimethyl-2-hydroxyethyl)-2,4,8,10-tetraoxaspiro [5.5] undecane component units, and 75 to 50% by mole of ethylene glycol component units (provided that the total amount of the two component unit species is 100% by mole), and the dicarboxylic acid component units comprise terephthalic acid component units.

**5.** The process according to claim 1 for producing a polycarbonate resin extruded foam board having thermal insulation properties, wherein the diol component units comprise 30 to 45% by mole of 3,9-bis (1,1-dimethyl-2-hydroxyethyl)-2,4,8,10-tetraoxaspiro [5.5] undecane component units, and 70 to 55% by mole of ethylene glycol component units (provided that the total amount of the two component unit species is 100% by mole), and the dicarboxylic acid component units comprise terephthalic acid component units.

**6.** The process according to claim 1 for producing a polycarbonate resin extruded foam board having thermal insulation properties, wherein the polyester resin is a resin satisfying the following: a value of 0 to 5 J/g is the calorific value of an exothermic peak associated with crystallization of the polyester resin in a DSC curve thereof that is obtained by keeping the polyester resin at 300°C for 10 minutes and subsequently cooling the resin at a cooling rate of 10°C/minute by heat flux differential scanning calorimetry according to JIS K 7122(1987).

**7.** The process according to claim 1 for producing a polycarbonate resin extruded foam board having thermal insulation properties, wherein the blend amount of the branching agent is from 0.05 to 30 parts by weight for 100 parts by weight of the polycarbonate resin.

**8.** The process according to claim 1 for producing a polycarbonate resin extruded foam board having thermal insulation properties, wherein an apparent density of the polycarbonate resin extruded foam is from 40 to 400 kg/m3, a thickness of the polycarbonate resin extruded foam is 10 mm or more, and a volume percentage of closed cells in the polycarbonate resin extruded foam is 50% or more.

**Patentansprüche**

**1.** Verfahren zum Extrudieren und Schäumen eines schäumbaren, aufgeschmolzenen Harzes, welches durch Kneten eines Polycarbonatharzes, eines Polyesterharzes und eines Triebmittels erhalten wird, wobei das schäumbare aufgeschmolzene Harz aus einer flachen Düse zu einem Formwerkzeug extrudiert und aufgeschäumt wird, welches aus oberen und unteren Platten oder aus oberen und unteren Förderbändern besteht, wodurch ein extrudiertes Schaumbrett aus Polycarbonatharz mit wärmeisolierenden Eigenschaften hergestellt wird, wobei das Polyesterharz ein Polyestercopolymer ist, umfassend mehr als eine Diolkomponenteneinheit, die darin Glycolkomponenteneinheiten mit einer zyklischen Etherstruktur mit einem Anteil von 25 bis 50 Mol-% der Diolkomponenteneinheiten enthält, und eine oder mehrere Dicarbonsäurekomponenteneinheiten, und wobei das Polycarbonatharz ein modifiziertes Polycarbonatharz umfasst, welches mit einem Verzweigungsmittel modifiziert ist, das ein Acrylpolymer mit einer Epoxygruppe umfasst, und wobei die Mischungsmenge des Polyesterharzes zwischen 5 und 100 Gewichtsteile pro 100 Gewichtsteile des Polycarbonatharzes beträgt.

**2.** Verfahren zur Herstellung eines extrudierten Schaumbretts aus Polycarbonatharz mit wärmeisolierenden Eigenschaften nach Anspruch 1, wobei der Anteil pro Mol der Glycolkomponenteneinheiten mit der zyklischen Esterstruktur in den Diolkomponenteneinheiten 30 bis 45 Mol-% beträgt.

3. Verfahren zur Herstellung eines extrudierten Schaumbretts aus Polycarbonatharz mit wärmeisolierenden Eigenschaften nach Anspruch 1, wobei die Mischungsmenge des Polyesterharzes zwischen 10 und 70 Gewichtsteile pro 100 Gewichtsteile des Polycarbonatharzes beträgt.

4. Verfahren zur Herstellung eines extrudierten Schaumbretts aus Polycarbonatharz mit wärmeisolierenden Eigenschaften nach Anspruch 1, wobei die Diolkomponenteneinheiten 25 bis 50 Mol-% 3,9-bis (1,1-dimethyl-2-hydroxyethyl)-2,4,8,10-tetraoxaspiro [5.5] Undecankomponenteneinheiten umfassen, und 75 bis 50 Mol-% Ethylen-Glycolkomponenteneinheiten umfassen (vorausgesetzt, dass die Summe der beiden Komponenteneinheitenarten 100% Mol-% beträgt), und wobei die Dicarbonsäurekomponenteneinheiten Terephthalsäurekomponenteneinheiten umfassen.

5. Verfahren zur Herstellung eines extrudierten Schaumbretts aus Polycarbonatharz mit wärmeisolierenden Eigenschaften nach Anspruch 1, wobei die Diolkomponenteneinheiten 30 bis 45 Mol-% 3,9-bis (1,1-dimethyl-2-hydroxyethyl)-2,4,8,10-tetraoxaspiro [5.5] Undecankomponenteneinheiten umfassen, und 70 bis 55 Mol-% Ethylen-Glycolkomponenteneinheiten umfassen (vorausgesetzt, dass die Summe der beiden Komponenteneinheitenarten 100 Mol-% beträgt), und wobei die Dicarbonsäurekomponenteneinheiten Terephthalsäurekomponenteneinheiten umfassen.

6. Verfahren zur Herstellung eines extrudierten Schaumbretts aus Polycarbonatharz mit wärmeisolierenden Eigenschaften nach Anspruch 1, wobei das Polyesterharz ein Harz ist, welches folgendes erfüllt: ein Wert von 0 bis 5 J/g ist der Wärmewert eines exothermen Peaks, der mit der Kristallisation des Polyesterharzes auf einer DSC-Kurve desselben assoziiert ist, die dadurch erhalten wird, dass das Polyesterharz durch Wärmestrom-Differentialrasterkalorimetrie gemäß JIS K 7122 (1987) für 10 Minuten bei 300°C gehalten und das Harz danach mit einer Kühlrate von 10°C/Minute abgekühlt wird.

7. Verfahren zur Herstellung eines extrudierten Schaumbretts aus Polycarbonatharz mit wärmeisolierenden Eigenschaften nach Anspruch 1, wobei die Mischungsmenge des Verzweigungsmittels zwischen 0,05 und 30 Gewichtsteile pro 100 Gewichtsteile des Polycarbonatharzes beträgt.

8. Verfahren zur Herstellung eines extrudierten Schaumbretts aus Polycarbonatharz mit wärmeisolierenden Eigenschaften nach Anspruch 1, wobei eine relative Dichte des extrudierten Polycarbonatharzschaumes zwischen 40 und 400 kg/$m^3$ beträgt, eine Dicke des extrudierten Polycarbonatharzschaumes 10 mm oder mehr beträgt, und ein Volumenanteil an geschlossenen Zellen in dem extrudierten Polycarbonatharzschaum 50% oder mehr beträgt.

## Revendications

1. Un procédé pour extruder et faire mousser une résine fondue moussante obtenue par malaxage d'une résine polycarbonate, d'une résine polyester et d'un agent gonflant, par extrusion et moussage de la résine moussante fondue depuis une filière plate jusqu'à un outil de mise en forme composé de plaques supérieures et inférieures, ou un convoyeur à bandes supérieure et inférieure, produisant ainsi un panneau de mousse de résine polycarbonate extrudée ayant des propriétés d'isolation thermique, dans lequel la résine polyester est un copolymère de polyester comprenant plus de une unité de composé diol qui recèle des unités de composant glycol ayant une structure d'éther cyclique en une quantité de 25% à 50% par mole des unités de composé diol, et une ou plusieurs unités de composant d'acide dicarboxylique, et la résine polycarbonate inclut une résine polycarbonate modifiée, modifiée avec un agent de branchement comprenant un polymère acrylique ayant un groupe epoxy, et la quantité du mélange de résine polyester est de 5 à 100 parties en poids pour 100 parties en poids de la résine polycarbonate.

2. Le procédé selon la revendication 1 pour produire un panneau de mousse de résine polycarbonate extrudée ayant des propriétés d'isolation thermique, dans lequel le pourcentage en mole des unités de composant glycol ayant une structure d'éther cyclique dans les unités de composant diol est de 30 à 45% en mole.

3. Le procédé selon la revendication 1 pour produire un panneau de mousse de résine polycarbonate extrudée ayant des propriétés d'isolation thermique, dans lequel la quantité de la résine polyester du mélange est de 10 à 70 parties en poids pour 100 parties en poids de la résine polycarbonate.

4. Le procédé selon la revendication 1 pour produire un panneau de mousse de résine polycarbonate extrudée ayant des propriétés d'isolation thermique, dans lequel les unités de composant diol comprennent 25 à 50% en mole

d'unités de composant 3,9-bis (1,1-diméthyl-2-hydroxyethyl)-2,4,8,10-tetraoxaspiro[5.5]undecane, et 75 à 50% en mole d'unités de composant éthylène glycol (pourvu que la quantité totale des deux espèces d'unités de composants soit de 100% en mole), et les unités de composant d'acide dicarboxylique comprennent des unités de composant d'acide terephthalique.

**5.** Le procédé selon la revendication 1 pour produire un panneau de mousse de résine polycarbonate extrudée ayant des propriétés d'isolation thermique, dans lequel les unités de composants diol comprennent 30 à 45% en mole d'unités de composant 3,9-bis(1,1-diméthyl-2-hydroxyéthyl)-2,4,8,10-tetraoxaspiro[5.5]undecane, et 70 à 55% en moles d'unités de composant éthylène glycol (pourvu que la quantité totale des deux espèces d'unités de composants soit de 100% en mole), et les unités de composant d'acide dicarboxylique comprennent des unités de composant d'acide terephthalique.

**6.** Le procédé selon la revendication 1 pour produire un panneau de mousse de résine polycarbonate extrudée ayant des propriétés d'isolation thermique, dans lequel la résine polyester est une résine satisfaisant à ce qui suit : une valeur de 0 à 5 J/g est la valeur calorifique d'un pic exothermique associé à la crystalisation de la résine polyester dans une courbe DSC de celle-ci qui est obtenue en maintenant la résine polyester à 300°C pendant 10 minutes et en refroidissant ultérieurement la résine à un taux de refroidissement de 10°C/minute par calorimétrie à balayage différentiel à flux de chaleur selon JIS K 7122 (1987).

**7.** Le procédé selon la revendication 1 pour produire un panneau de mousse de résine polycarbonate extrudée ayant des propriétés d'isolation thermique, dans lequel la quantité dans le mélange de l'agent branchant est de 0,05 à 30 parties en poids pour 100 parties en poids de la résine polycaronate.

**8.** Le procédé selon la revendication 1 pour produire un panneau de mousse de résine polycarbonate extrudée ayant des propriétés d'isolation thermique, dans lequel une densité apparente de la mousse extrudée de résine polycarbonate est de 40 à 400 kg/$m^3$, une épaisseur de la mousse extrudée de résine polycarbonate est de 10 mm ou plus, et un pourcentage volumique de cellules fermées dans la mousse extrudée de résine polycarbonate est de 50% ou plus.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3692411 B
- JP 11254502 A
- JP 2006199879 A
- JP 2008144084 A
- JP 3448758 B